# FASCICULE DE BREVET EUROPEEN

(11) **EP 3 057 853 B1**
(45) Date de publication et mention de la délivrance du brevet: **11.03.2020**
(21) Numéro de dépôt: 14824041.9
(22) Date de dépôt: 10.10.2014
(51) Int. Cl.: B62D 27/00, B60H 1/00

(54) **MODULE ÉCONOMISEUR D'ÉNERGIE**
ENERGIESPARENDES MODUL
ENERGY SAVING MODULE

(30) Priorité: 15.10.2013 FR 1360027
(43) Date de publication de la demande: 24.08.2016
(73) Titulaire: Faiveley Transport Tours, 37700 Saint Pierre des Corps (FR)
(72) Inventeur: AUBIN, Philippe, 37390 Chanceaux Sur Choisille (FR)
(74) Mandataire: Santarelli
(86) Numéro de dépôt international: PCT/FR2014/052575
(87) Numéro de publication internationale: WO 2015/055922

(56) Documents cités:
- EP-A2- 1 818 238
- DE-A1-102007 012 421
- DE-A1-102010 018 906
- DE-C1- 19 625 868
- JP-A- 2003 319 501

## Description

La présente invention concerne un ensemble de régulation de température comportant un module économiseur d'énergie, un système de régulation de température et un capteur de température.

De manière générale, les systèmes de régulation de température sont associés à des moyens de climatisation et sont configurés pour maintenir la température d'un habitacle à une température de consigne.

Ainsi, les moyens de climatisation peuvent être configurés pour chauffer l'habitacle ou pour refroidir l'habitacle.

En fonction de la valeur de température mesurée par le capteur de température, des moyens de climatisation sont soit activés, soit à l'arrêt, ou encore modulés en puissance afin de maintenir l'habitacle à la température de consigne.

Ainsi, par exemple si la température mesurée par le capteur de température est supérieure à la température de consigne, et que les moyens de climatisation sont configurés pour chauffer à une puissance de fonctionnement, les moyens de climatisation sont arrêtés ou la valeur de la puissance de fonctionnement est diminuée jusqu'à ce que la température mesurée par le capteur de température soit inférieure à la température de consigne. Lorsque la température mesurée par le capteur de température devient inférieure à la température de consigne, les moyens de climatisation sont activés ou la valeur de la puissance de fonctionnement est augmentée. Le document EP 1 818 238 A2 décrit un ensemble de régulation de température configuré pour réduire la vitesse d'un ventilateur lorsque le train est à quai.

Certains véhicules de transport en commun, comme par exemple les véhicules ferroviaire sont sous tension en continu afin d'assurer leur disponibilité.

En effet, les compagnies exploitantes des véhicules ferroviaires considèrent que lors de la mise en route après un arrêt prolongé, des pannes peuvent se présenter provoquant des difficultés d'organisation.

Ainsi, les compagnies décident, en général, de conserver sous tension les véhicules ferroviaires, même lorsque l'arrêt du véhicule est prolongé, par exemple lorsqu'il est en arrêt pour une nuit.

Les moyens de climatisation des véhicules ferroviaires continuent donc de fonctionner lorsque le véhicule est à l'arrêt.

La consommation d'énergie électrique des installations des moyens de climatisation représentent une partie élevée de la consommation du véhicule à l'arrêt.

La présente invention a pour but de proposer un module économiseur d'énergie permettant d'économiser de l'énergie électrique consommée par des moyens de climatisation.

A cet égard, la présente invention vise, selon un premier aspect, un ensemble de régulation de température comportant un module économiseur d'énergie, un système de température et un capteur de température, le module économiseur d'énergie comportant des moyens de connexion au système de régulation de température et au capteur de température, le système de régulation étant associé à des moyens de climatisation et étant configuré pour maintenir la température d'un habitacle de véhicule de transport en commun à une température de consigne en fonction d'une température mesurée par le capteur de température correspondant à la température de l'habitacle.

Selon l'invention, le module économiseur d'énergie comporte des moyens de décalage de température aptes à décaler la température mesurée par le capteur de température d'une valeur prédéterminée, la température mesurée par le capteur de température étant incrémentée lorsque les moyens de climatisation sont configurés pour chauffer et la température mesurée par le capteur de température étant diminuée lorsque les moyens de climatisation sont configurés pour refroidir.

Ainsi, le système de régulation maintient la température de l'habitacle à la température de consigne en fonction de la température mesurée par le capteur de température qui a été décalée, c'est-à-dire incrémentée ou diminuée d'une valeur prédéterminée.

Cet incrément ou diminution augmente à chaque instant l'écart entre la température de consigne et la température servant comme référence pour le système de régulation, c'est-à-dire la température mesurée par le capteur de température décalée.

Ainsi, le système de régulation empêche des moyens de climatisation de chauffer ou de refroidir l'habitacle jusqu'à ce que la température mesurée par le capteur de température décalée diminue ou augmente respectivement jusqu'à une valeur proche de la température de consigne.

Par conséquent, le système de régulation empêche les moyens de climatisation de chauffer ou refroidir l'habitacle, et la consommation d'énergie électrique est réduite.

On notera que le module économiseur d'énergie modifie la température mesurée par le capteur de température, et le système de régulation de température ne maintient pas la température de l'habitacle à la température de consigne en fonction de la température mesurée réellement par le capteur de température, mais en fonction de la température mesurée par le capteur de température décalée.

Selon une caractéristique, les moyens de décalage incrémentent ou diminuent la température mesurée par le capteur de température en fonction d'une température extérieure à l'habitacle.

Ainsi, en fonction de la température extérieure à l'habitacle, les moyens de décalage de la température incrémentent ou diminuent la température mesurée par le capteur de température.

Par conséquent, lorsque la température extérieure est telle que les moyens de climatisation sont configurés pour chauffer, la température mesurée par le capteur de température est incrémentée, et lorsque la température extérieure à l'habitacle est telle que les moyens de climatisation sont configurés pour refroidir, la température de contrôle est diminuée.

Selon une caractéristique, le module économiseur d'énergie comporte des moyens de contrôle pour mettre le module économiseur d'énergie en mode de fonctionnement ou en mode d'arrêt.

Selon un mode de réalisation, le module économiseur d'énergie comporte en outre des moyens de réception aptes à recevoir des signaux de commande et les moyens de contrôle mettent le module économiseur d'énergie en mode de fonctionnement ou en mode d'arrêt en fonction d'un signal de commande reçu.

Ainsi, il n'est pas nécessaire qu'une personne se déplace pour mettre en fonctionnement et pour arrêter le module économiseur d'énergie dans le véhicule ferroviaire.

Selon un autre mode de réalisation, le module économiseur d'énergie comporte en outre un module d'interface utilisateur et les moyens de contrôle mettent le module économiseur d'énergie en mode de fonctionnement ou en mode d'arrêt en fonction d'un signal de commande provenant du module d'interface utilisateur.

Selon une caractéristique, le signal de commande comporte des informations horaires auxquelles le module économiseur d'énergie doit être mis en fonctionnement ou arrêter son fonctionnement.

Ainsi, l'heure à laquelle le module économiseur d'énergie doit être mis en fonctionnement ou arrêté est programmée à distance.

Avantageusement, le module économiseur d'énergie comporte des moyens de détection de mouvement et les moyens de commande sont configurés pour mettre en fonctionnement ou pour arrêter le fonctionnement du module économiseur d'énergie en fonction d'un signal provenant des moyens de mouvement.

Grâce à cette caractéristique, les moyens de détection de mouvement constituent une redondance dans la mise en fonctionnement et dans l'arrêt du module économiseur d'énergie.

Selon une autre caractéristique, le module économiseur d'énergie comporte un module générateur d'énergie pour alimenter en énergie électrique le module économiseur d'énergie.

Le module économiseur d'énergie ne nécessite donc pas l'alimentation extérieure au module.

Dans un mode de réalisation, le module générateur d'énergie comporte une cellule solaire.

Dans un autre mode de réalisation, le module générateur d'énergie comporte des moyens de conversion d'énergie mécanique en énergie électrique.

Dans un autre mode de réalisation, le module générateur d'énergie comporte des moyens de conversion d'énergie mécanique en énergie électrique.

Ainsi, par exemple, les vibrations du véhicule peuvent être utilisées pour générer de l'énergie électrique.

Avantageusement, le module économiseur d'énergie comporte des moyens de stockage d'énergie.

Ces moyens de stockage peuvent être utilisés par exemple lorsque le module est mis en fonctionnement.

Selon un deuxième aspect, la présente invention concerne un système de contrôle des moyens de climatisation comportant un ensemble de régulation de température conforme à l'invention et un centre de configuration, l'ensemble de régulation de température étant situé dans un véhicule de transport en commun, et le centre de configuration étant externe au véhicule de transport en commun et étant configuré pour envoyer des commandes aptes à configurer la mise en fonctionnement ou l'arrêt du module économiseur d'énergie.

Selon un troisième aspect, la présente invention concerne un véhicule de transport en commun, notamment un véhicule ferroviaire comportant des moyens de climatisation et un ensemble de régulation de la température conforme à l'invention.

Selon une caractéristique, la mise en fonctionnement ou l'arrêt du module économiseur d'énergie est configurée par une commande reçue d'un centre de configuration externe audit véhicule de transport en commun.

L'ensemble de régulation de la température, le système de contrôle des moyens de climatisation, ainsi que le véhicule de transport en commun présentent des avantages analogues à ceux décrits précédemment en référence au module économiseur d'énergie conforme à l'invention.

En particulier, un tel ensemble de régulation de la température permet de réguler la température d'un habitacle tout en diminuant l'énergie électrique consommée par les moyens de climatisation chauffant ou refroidissant l'habitacle.

Un véhicule de transport en commun comportant un ensemble de régulation de la température conforme à l'invention consomme ainsi moins d'énergie électrique.

D'autres particularités et avantages de l'invention apparaîtront encore dans la description ci-après.

Aux dessins annexés, donnés à titre d'exemple non limitatif :
- la figure 1 représente le contexte d'utilisation d'un module économiseur d'énergie conforme à l'invention ; et
- la figure 2 représente un module économiseur d'énergie conforme à un mode de réalisation de l'invention.

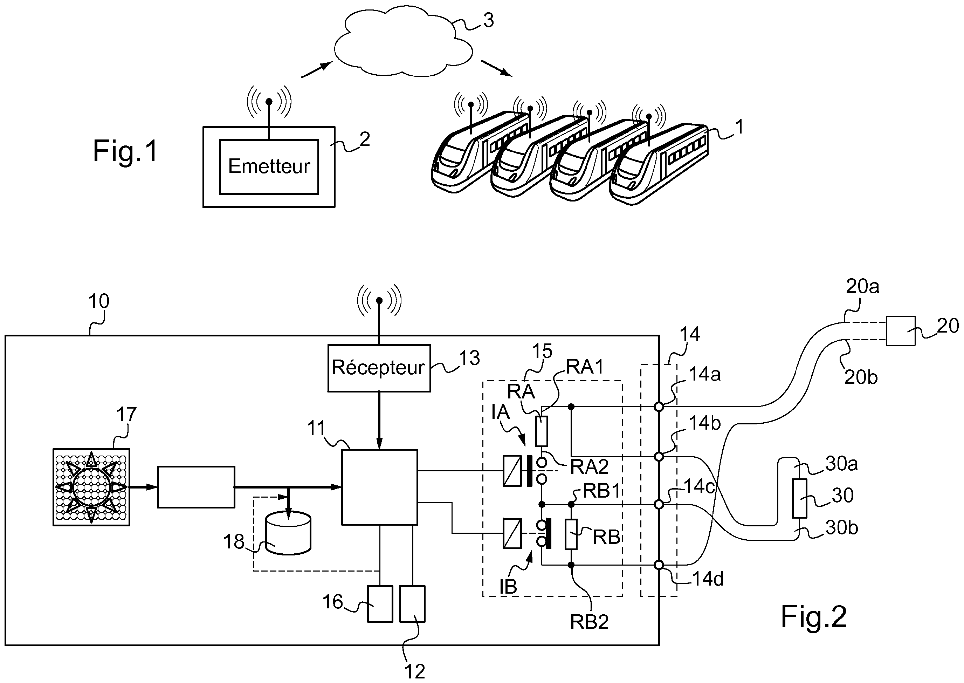

La figure 1 représente un exemple de contexte dans lequel un module économiseur d'énergie est utilisé dans des véhicules de transport en commun.

L'invention s'applique particulièrement aux véhicules ferroviaires comme par exemple des trains, des métros, des tramways.

Néanmoins, elle peut s'appliquer à tout autre type de véhicule de transport en commun, comme des autobus, autocars, tramways sur pneumatiques, trolleybus, etc.

Dans l'exemple décrit, les véhicules de transport en commun sont des véhicules ferroviaires 1, plus particulièrement des trains.

Chaque véhicule ferroviaire 1 comporte des moyens de climatisation (non illustrés) configurés pour chauffer ou pour refroidir un ou plusieurs habitacles.

Dans la suite de la description, on se réfère à des moyens de climatisation configurés pour chauffer ou pour refroidir un habitacle.

Bien entendu, la description s'applique également à des moyens de climatisation configurés pour chauffer ou refroidir plusieurs habitacles.

Les moyens de climatisation peuvent comporter une installation pour chauffer l'habitacle et une installation pour refroidir l'habitacle, ou comporter une seule installation pour chauffer ou refroidir l'habitacle.

Les moyens de climatisation sont associés à un système de régulation de température (référencé 20 à la figure 2) qui est configuré pour maintenir la température de l'habitacle du véhicule ferroviaire à une température de consigne en fonction d'une température mesurée par le capteur de température correspondant à une température de l'habitacle mesurée par un capteur de température (référencé 30 à la figure 2).

La figure 2 illustre un module économiseur d'énergie 10 conforme à un mode de réalisation qui est connecté au système de régulation de température 20 et au capteur de température 30.

Le module économiseur d'énergie 10 peut se trouver dans un mode de fonctionnement ou dans un mode d'arrêt.

Des moyens de contrôle 11 sont configurés pour gérer le fonctionnement du module économiseur d'énergie 10, en particulier, pour mettre le module économiseur d'énergie 10 en mode de fonctionnement ou en mode d'arrêt.

Ainsi, les moyens de contrôle 11 peuvent commander la mise du module économiseur d'énergie 10 en mode de fonctionnement ou en mode d'arrêt à partir d'au moins une commande provenant d'un module d'interface utilisateur 12, le module d'interface d'utilisateur 12 étant apte à recevoir des informations de la part d'un opérateur.

Ainsi, un opérateur peut mettre en fonctionnement ou en arrêt le module économiseur d'énergie 10 manuellement, par exemple en utilisant un organe de commande tel qu'un bouton poussoir, un bouton rotatif, une touche sensitive ou autre.

Dans un mode de réalisation, le module d'interface utilisateur 12 est apte à recevoir des informations de la part d'un opérateur de façon à mettre en mode de fonctionnement ou d'arrêt le module économiseur d'énergie 10 à une heure précise.

Selon un autre mode de réalisation, la mise du module économiseur d'énergie 10 en mode de fonctionnement ou en mode d'arrêt peut être configurée au moyen d'un centre de configuration 2 externe au véhicule ferroviaire.

Le centre de configuration 2 est apte à émettre des commandes vers les véhicules ferroviaires 1 au travers d'un réseau de communication 3.

Le centre de communication 2 est par exemple un serveur qui est apte à générer des signaux de commande configurant la mise en mode de fonctionnement ou d'arrêt d'un module économiseur d'énergie 10 se trouvant dans chacun des véhicules ferroviaires 1.

Par exemple, le centre de configuration 2 peut commander la mise en fonctionnement instantanée d'un module économiseur d'énergie 10 dans un ou plusieurs véhicules ferroviaires 1.

Dans un autre exemple, le signal de commande contient des informations horaires auxquelles le module économiseur d'énergie 10 doit être mis en fonctionnement ou doit être arrêté.

Ainsi, le module économiseur d'énergie 10 est mis en mode de fonctionnement ou en mode d'arrêt en fonction des informations horaires dans le signal de commande.

Ainsi, par exemple, le centre de configuration 2 peut configurer la mise en fonctionnement du module économiseur d'énergie 10 d'un véhicule ferroviaire 1 quelque temps après l'arrivée en gare du véhicule ferroviaire 1, et l'arrêt du fonctionnement du module économiseur d'énergie 10 quelque temps avant le départ du véhicule ferroviaire 1.

Par conséquent, le module économiseur d'énergie 10 étant en mode de fonctionnement lorsque le véhicule ferroviaire 1 est à l'arrêt, la consommation d'énergie électrique du véhicule ferroviaire 1 est diminuée.

Les signaux de commande provenant du centre de configuration 2 sont reçus au moyen d'un module récepteur 13 prévu dans le module économiseur d'énergie 10.

Les moyens de contrôle 11 configurent ainsi le fonctionnement du module économiseur d'énergie 10 en fonction des signaux de commande reçus par le module récepteur 13, ou en fonction des signaux de commande reçus par le module d'interface utilisateur 12.

Le module économiseur d'énergie 10 comporte des moyens de connexion 14 au système de régulation de température 20 et au capteur de température 30 mesurant la température de l'habitacle du véhicule ferroviaire 1.

Dans un mode de réalisation, les moyens de connexion 14 sont aptes à recevoir des fils électriques 20a, 20b provenant du système de régulation de température 20 et des fils électriques 30a, 30b provenant du capteur de température 30.

Bien entendu, dans d'autres modes de réalisation, la connexion entre le module économiseur d'énergie 10 à travers les moyens de connexion 14 et le système de régulation 20 et/ou le capteur de température 30 peut être mise en œuvre par d'autres moyens, par exemple par une communication via une technologie sans fil (par exemple par liaison radio courte distance, comme par exemple des infrarouges ou la technologie radio « Bluetooth » (marque déposée)).

Le module économiseur d'énergie 10 comporte des moyens de décalage de température 15 aptes à décaler la température de mesurée par le capteur de température d'une valeur prédéterminée.

Les moyens de contrôle 11 configurent les moyens de décalage 15 de façon à incrémenter ou à diminuer la température mesurée par le capteur de température en fonction de la configuration pour chauffer ou pour refroidir des moyens de climatisation.

En particulier, la température mesurée par le capteur de température est incrémentée lorsque les moyens de climatisation sont configurés pour chauffer l'habitacle et la température mesurée par le capteur de température est diminuée lorsque les moyens de climatisation sont configurés pour refroidir l'habitacle.

Ainsi, le module économiseur d'énergie doit être configuré, par exemple, au moyen du module d'interface utilisateur 12 ou du centre de configuration 2, pour incrémenter ou pour diminuer la température mesurée par le capteur de température.

Le système de régulation 20 maintient donc la température de l'habitacle à la température de consigne en fonction d'une température mesurée par le capteur de température incrémentée ou d'une température de consigne diminuée.

Ainsi, le module économiseur d'énergie modifie la température mesurée par le capteur de température et le système de régulation ne tient plus en compte la température mesurée réellement par le capteur.

Dans un mode de réalisation, les moyens de décalage de température 12 comportent une première résistance RA, un premier interrupteur IA, une deuxième résistance RB et un deuxième interrupteur IB.

La première résistance RA est connectée en série avec le premier interrupteur IA, et la deuxième résistance RB est connectée en parallèle au deuxième interrupteur IB.

L'ensemble formé par la première résistance RA et par le premier interrupteur IA et l'ensemble formé par la deuxième résistance RB et par le deuxième IB sont connectés entre eux en série.

Une première borne RA1 de la première résistance RA est reliée à un premier point de connexion 14a, ainsi que un deuxième point de connexion 14b.

Une première borne RB1 de la deuxième résistance RB est reliée à un troisième point de connexion 14c, et une deuxième borne RB2 de la deuxième résistance RB est reliée à un quatrième point de connexion 14d.

Les points de connexion 14a, 14b, 14c, 14d constituent les moyens de connexion 14.

Ainsi, comme représenté à la figure 2, dans le mode de réalisation décrit, le système de régulation de température 20 est relié au module économiseur d'énergie 10 à travers le premier point de connexion 14a et le quatrième point de connexion 14d auquel il est relié respectivement au moyen d'un premier fil de connexion 20a et un deuxième fil de connexion 20b.

Le capteur de température 30 est relié au module économiseur d'énergie 10 à travers le deuxième point de connexion 14b et troisième point de connexion 14c respectivement au moyen d'un troisième fil de connexion 30a et d'un quatrième fil de connexion 30b.

La première résistance R1 est reliée par une deuxième borne RA2 au premier interrupteur IA qui est relié à la fois au deuxième interrupteur IB ainsi qu'à la première borne RB1 de la deuxième résistance RB.

La première borne RB1 de la deuxième résistance RB est connectée au troisième point de connexion 14c, et une deuxième borne RB2 de la deuxième résistance RB est connectée au quatrième point de connexion 14d.

L'ouverture et la fermeture du premier interrupteur IA et du deuxième interrupteur IB est commandée par les moyens de commande 11 de façon à configurer les moyens de décalage 15 pour incrémenter ou diminuer la température mesurée par le capteur de température.

Ainsi, la commande des interrupteurs IA, IB est mise en œuvre notamment en fonction du fonctionnement des moyens de climatisation, c'est-à-dire si les moyens de climatisation sont configurés pour chauffer ou pour refroidir. La commande des interrupteurs IA, IB est mise en œuvre en outre, en fonction du mode de fonctionnement du module économiseur d'énergie 10 (mode de fonctionnement ou en mode d'arrêt).

Dans le mode de réalisation décrit, les moyens de décalage 12 sont configurés pour augmenter ou diminuer la résistance du capteur de température 30.

Dans un mode de réalisation, la température mesurée par le capteur de température 30 est directement proportionnelle à sa résistance.

Le système de régulation permet l'activation et l'arrêt des moyens de climatisation en fonction de la température mesurée par le capteur de température, cette température mesurée par le capteur de température étant associée à la valeur de la résistance du capteur de température 30.

En connectant les résistances RA et RB au capteur de température, la valeur de la résistance associée à la température mesurée par le capteur de température varie.

Les résistances RA, RB sont connectées ou déconnectées en fonction de l'ouverture ou la fermeture des interrupteurs IA, IB.

Ainsi, dans un mode de réalisation, lorsque les moyens de climatisation sont configurés pour refroidir l'habitacle, le premier interrupteur IA et le deuxième interrupteur IB sont fermés.

Ainsi, la première résistance RA est connectée en parallèle avec le capteur de température 30, la résistance formée par la première résistance RA et le capteur de température 30 étant inférieure à la seule résistance du capteur de température 30 pour une température déterminée lorsqu'il fonctionne en l'absence du module économiseur d'énergie.

Ainsi, dans ce mode de réalisation, la température mesurée par le capteur de température est diminuée, le système de régulation utilisant cette température mesurée par le capteur de température diminuée pour mettre en fonctionnement ou arrêter les moyens de climatisation afin de maintenir la température de l'habitacle à une température de consigne.

Dans le mode de réalisation décrit, lorsque les moyens de climatisation sont configurés pour chauffer l'habitacle, le premier interrupteur IA et le deuxième interrupteur IB sont ouverts.

Ainsi, la seconde résistance RB est connectée en série avec le capteur de température 30, la résistance formée par la seconde résistance RB et le capteur de température étant supérieure à la seule résistance du capteur de température 30 pour une température déterminée lorsqu'il fonctionne en l'absence du module économiseur d'énergie 10.

Dans le mode de réalisation décrit, la température mesurée par le capteur de température 30 dépendant linéairement de sa résistance, la température mesurée par le capteur de température est incrémentée.

A titre d'exemple nullement limitatif, la résistance du capteur de température 30 est égale à 100 Ohm+0.385 Ohm/°C.

Par conséquent, le système de régulation 20 utilise une température supérieure à la température réellement mesurée par le capteur de température 30.

Lorsque le module économiseur d'énergie 10 se trouve en mode d'arrêt, le système de régulation de température 20 fonctionne normalement, c'est-à-dire qu'il fonctionne comme si le module économiseur d'énergie 10 n'était pas connecté au système de régulation de température 20.

Dans le mode de réalisation décrit, lorsque le module économiseur d'énergie 10 est configuré en mode d'arrêt, le premier interrupteur IA est ouvert et le deuxième interrupteur IB est fermé.

Ainsi, dans cette configuration, la résistance formée par le capteur de température 30 ainsi que par la première résistance RA et/ou la deuxième résistance RB est équivalente à la résistance du capteur de température 30, la température mesurée par le capteur de température n'étant donc pas décalée.

Le fonctionnement du module économiseur d'énergie 10 décrit ci-dessus est valable pour un capteur de température pour lequel la résistance augmente linéairement avec la température mesurée. Toutefois, des capteurs de température pour lesquels la résistance décroit linéairement avec la température directement t pourraient être utilisés.

Dans ce cas, lorsque la résistance formée par le capteur de température 30 et la première résistance RA et/ou la deuxième résistance RB est inférieure à la résistance du capteur de température 30 pour une température déterminée, la température mesurée par le capteur de température est incrémentée et le système de régulation 20 utilise une température mesurée par le capteur de température supérieure à la température réellement mesurée par le capteur de température 30.

Au contraire, lorsque la résistance formée par le capteur de température 30 est par la première résistance RA et/ou la deuxième résistance RB est supérieure à la résistance du capteur de température 30 pour une température déterminée, la température mesurée par le capteur de température est diminuée, et le système de régulation 20 utilise une température mesurée par le capteur de température inférieure à la température réellement mesurée par le capteur de température 30.

Le module économiseur d'énergie comporte en outre des moyens de détection de mouvement 16. Ces moyens de mouvement 16 sont aptes à détecter lorsque le véhicule ferroviaire 1 est en mouvement ou est à l'arrêt.

L'information générée par les moyens de détection de mouvement 16 est utilisée par les moyens de commande 11 afin de configurer la mise en fonctionnement ou l'arrêt du module économiseur d'énergie 10.

Ainsi, lorsqu'un signal provenant des moyens de détection de mouvement 16 est représentatif de l'arrêt du véhicule ferroviaire 1, le module économiseur d'énergie 10 est mis en mode de fonctionnement, et lorsque le signal provenant des moyens de détection de mouvement 16 est représentatif de la marche du véhicule ferroviaire 1, le module économiseur d'énergie 10 est mis en mode d'arrêt.

L'information provenant des moyens de détection de mouvement 16 peut être couplée à l'information provenant du module d'interface utilisateur 12 ou du centre de configuration 2 externe au véhicule ferroviaire 1.

Ainsi, par exemple, lorsque l'horaire prévu d'arrêt du véhicule ferroviaire est dépassé, et que les moyens de détection de mouvement 16 ne détectent plus de mouvement, les moyens de contrôle 13 mettent le module économiseur d'énergie 10 en mode d'arrêt.

A titre d'exemple nullement limitatif, les moyens de détection de mouvement 16 peuvent comporter un accéléromètre piézo-électrique ou magnétique.

Le module économiseur d'énergie 10 comporte en outre un module générateur d'énergie 17 pour alimenter en énergie électrique le module économiseur d'énergie 10, ce module générateur d'énergie 17 pouvant être par exemple une cellule solaire.

Ce module économiseur d'énergie 10 est ainsi autonome et n'a pas besoin d'être relié au système d'alimentation du véhicule ferroviaire 1.

Dans un autre mode de réalisation, le module générateur d'énergie comprend des moyens de conversion d'énergie mécanique en énergie électrique (non illustrés) aptes à transformer en énergie électrique par exemple des vibrations du véhicule ferroviaire 1 détectées par les moyens de détection de mouvement 16.

Le module économiseur d'énergie 10 comporte des moyens de stockage d'énergie 18, pouvant être par exemple une super capacité.

Ces moyens de stockage d'énergie 18 sont aptes à stocker l'énergie nécessaire pour démarrer la mise en fonctionnement le module économiseur d'énergie 10.

Une fois que le module économiseur d'énergie 10 est en mode de fonctionnement, le module générateur d'énergie 17 génère l'énergie électrique nécessaire au fonctionnement du module économiseur d'énergie 10.

Ainsi, grâce à l'invention, le système de régulation empêche des moyens de climatisation de chauffer ou de refroidir un habitacle d'un véhicule de transport en commun pendant que le véhicule est à l'arrêt, réduisant ainsi la consommation d'énergie électrique du véhicule de transport en commun lorsqu'il est à l'arrêt.

## Revendications

1. Ensemble de régulation de température comportant un module économiseur d'énergie (10), un système de régulation de température (20) et un capteur de température (30), ledit module économiseur d'énergie (10) comportant des moyens de connexion (14) audit système de régulation de température (20) et audit capteur de température (30), le système de régulation (20) étant associé à des moyens de climatisation et étant configuré pour maintenir la température d'un habitacle de véhicule de transport en commun à une température de consigne en fonction d'une température mesurée par le capteur de température (30) correspondant à la température de l'habitacle, ledit ensemble étant **caractérisé en ce que** le module économiseur d'énergie (10) comporte des moyens de décalage (15) de température aptes à décaler ladite température mesurée par le capteur de température (30) d'une valeur prédéterminée, ladite température mesurée par le capteur de température (30) étant incrémentée lorsque les moyens de climatisation sont configurés pour chauffer et ladite température mesurée par le capteur de température (30) étant diminuée lorsque les moyens de climatisation sont configurés pour refroidir.

2. Ensemble conforme à la revendication 1, **caractérisé en ce que** les moyens de décalage incrémentent ou diminuent la température mesurée par le capteur de température (30) en fonction d'une température extérieure audit habitacle.

3. Ensemble conforme à l'une des revendications 1 ou 2, **caractérisé en ce que** ledit module économiseur d'énergie (10) comporte des moyens de contrôle (11) pour mettre le module économiseur d'énergie (10) en mode de fonctionnement ou en mode d'arrêt.

4. Ensemble conforme à la revendication 3, **caractérisé en ce que** ledit module économiseur d'énergie (10) comporte en outre des moyens de réception (13) aptes à recevoir des signaux de commande et **en ce que** les moyens de contrôle (11) mettent le module économiseur d'énergie (10) en mode de fonctionnement ou en mode d'arrêt en fonction d'un signal de commande reçu.

5. Ensemble conforme à la revendication 3, **caractérisé en ce que** ledit module économiseur d'énergie (10) comporte en outre un module d'interface utilisateur (12) et **en ce que** les moyens de contrôle (11) mettent le module économiseur d'énergie (10) en mode de fonctionnement ou en mode d'arrêt en fonction d'un signal de commande provenant du module d'interface utilisateur (12).

6. Ensemble conforme à la revendication 4 ou 5, **caractérisé en ce que** le signal de commande comporte des informations horaires auxquelles le module économiseur d'énergie (10) doit être mis en fonctionnement ou arrêter son fonctionnement.

7. Ensemble conforme à l'une des revendications 3 à 6, **caractérisé en ce que** ledit module économiseur d'énergie (10) comporte des moyens de détection de mouvement (16) et **en ce que** lesdits moyens de commande (11) sont configurés pour mettre en fonctionnement ou pour arrêter le fonctionnement dudit module (10) en fonction d'un signal provenant desdits moyens de détection de mouvement (16).

8. Ensemble conforme à l'une des revendications 1 à 7, **caractérisé en ce que** ledit module économiseur d'énergie (10) comporte un module générateur d'énergie (17) pour alimenter en énergie électrique le module économiseur d'énergie (10).

9. Ensemble conforme à la revendication 8, **caractérisé en ce que** le module générateur d'énergie (17) comporte une cellule solaire.

10. Ensemble conforme à l'une des revendications 8 ou 9, **caractérisé en ce que** le module générateur d'énergie comporte des moyens de conversion d'énergie mécanique en énergie électrique.

11. Ensemble conforme à l'une des revendications 1 à 10, **caractérisé en ce que** ledit module économiseur d'énergie (10) comporte des moyens de stockage d'énergie (18).

12. Système de contrôle des moyens de climatisation comportant un ensemble de régulation de température conforme à l'une des revendications 1 à 11 et un centre de configuration (2), ledit ensemble de régulation de température étant situé dans un véhicule de transport en commun (1), et ledit centre de configuration (2) étant externe au véhicule de transport en commun (1) et étant configuré pour envoyer des commandes aptes à configurer la mise en fonctionnement ou l'arrêt du module économiseur d'énergie (10).

13. Véhicule de transport en commun, notamment véhicule ferroviaire, comportant des moyens de climatisation et un ensemble de régulation de la température conforme à l'une des revendications 1 à 11.

14. Véhicule de transport en commun conforme à la revendication 13, **caractérisé en ce que** la mise en fonctionnement ou l'arrêt du module économiseur d'énergie (10) est configurée par une commande reçue d'un centre de configuration (2) externe audit véhicule de transport en commun (1).

## Patentansprüche

1. Temperaturregelungsanordnung, enthaltend ein Energiesparmodul (10), ein Temperaturregelungssystem (20) und einen Temperatursensor (30), wobei das Energiesparmodul (10) Mittel (14) zum Verbinden mit dem Temperaturregelungssystem (20) und mit dem Temperatursensor (30) enthält, wobei das Regelungssystem (20) Klimatisierungsmitteln zugeordnet und dazu ausgelegt ist, die Temperatur eines Fahrgastraums eines öffentlichen Verkehrsmittels auf einer Solltemperatur in Abhängigkeit von einer vom Temperatursensor (30) gemessenen Temperatur, die der Temperatur des Fahrgastraums entspricht, zu halten, wobei die Anordnung **dadurch gekennzeichnet ist, dass** das Energiesparmodul (10) Temperaturverschiebemittel (15) enthält, die dazu geeignet sind, die vom Temperatursensor (30) gemessene Temperatur um einen vorbestimmten Wert zu verschieben, wobei die vom Temperatursensor (30) gemessene Temperatur erhöht wird, wenn die Klimatisierungsmittel zum Heizen konfiguriert sind, und die vom Temperatursensor (30) gemessene Temperatur verringert wird, wenn die Klimatisierungsmittel zum Kühlen konfiguriert sind.

2. Anordnung nach Anspruch 1, **dadurch gekennzeichnet, dass** die Verschiebemittel die von dem Temperatursensor (30) gemessene Temperatur in Abhängigkeit von einer Außentemperatur außerhalb des Fahrgastraums erhöhen bzw. verringern.

3. Anordnung nach einem der Ansprüche 1 oder 2, **dadurch gekennzeichnet, dass** das Energiesparmodul (10) Steuermittel (11) enthält, um das Energiesparmodul (10) ein- bzw. auszuschalten.

4. Anordnung nach Anspruch 3, **dadurch gekennzeichnet, dass** das Energiesparmodul (10) ferner Empfangsmittel (13) enthält, die dazu geeignet sind, Steuersignale zu empfangen, und dass die Steuermittel (11) das Energiesparmodul (10) in Abhängigkeit von einem empfangenen Steuersignal ein- bzw. ausschalten.

5. Anordnung nach Anspruch 3, **dadurch gekennzeichnet, dass** das Energiesparmodul (10) ferner ein Benutzer-Schnittstellenmodul (12) enthält und dass die Steuermittel (11) das Energiesparmodul (10) in Abhängigkeit von einem vom Benutzer-Schnittstellenmodul (12) stammenden Steuersignal ein- bzw. ausschalten.

6. Anordnung nach Anspruch 4 oder 5, **dadurch gekennzeichnet, dass** das Steuersignal Zeitinformationen enthält, zu denen das Energiesparmodul (10) ein- bzw. ausgeschaltet werden soll.

7. Anordnung nach einem der Ansprüche 3 bis 6, **dadurch gekennzeichnet, dass** das Energiesparmodul (10) Bewegungserfassungsmittel (16) enthält und dass die Steuermittel (11) dazu ausgelegt sind, das Modul (10) in Abhängigkeit von einem von den Bewegungserfassungsmitteln (16) stammenden Signal ein- bzw. auszuschalten.

8. Anordnung nach einem der Ansprüche 1 bis 7, **dadurch gekennzeichnet, dass** das Energiesparmodul (10) ein Energieerzeugungsmodul (17) enthält, um das Energiesparmodul (10) mit elektrischer Energie zu versorgen.

9. Anordnung nach Anspruch 8, **dadurch gekennzeichnet, dass** das Energieerzeugungsmodul (17) eine Solarzelle enthält.

10. Anordnung nach einem der Ansprüche 8 oder 9, **dadurch gekennzeichnet, dass** das Energieerzeugungsmodul Mittel zum Umwandeln von mechanischer Energie in elektrische Energie enthält.

11. Anordnung nach einem der Ansprüche 1 bis 10, **dadurch gekennzeichnet, dass** das Energieerzeugungsmodul (10) Energiespeichermittel (18) enthält.

12. Steuersystem zum Steuern von Klimatisierungsmitteln, enthaltend eine Temperaturregelungsanordnung nach einem der Ansprüche 1 bis 11 und eine Konfigurationszentrale (2), wobei die Temperaturregelungsanordnung sich in einem öffentlichen Verkehrsmittel (1) befindet und die Konfigurationszentrale (2) außerhalb des öffentlichen Verkehrsmittels (1) liegt und dazu ausgelegt ist, Befehle auszugeben, die dazu geeignet sind, das Einschalten bzw. Ausschalten des Energiesparmoduls (10) zu konfigurieren.

13. Öffentliches Verkehrsmittel, insbesondere Eisenbahnfahrzeug, enthaltend Klimatisierungsmittel und eine Temperaturregelungsanordnung nach einem der Ansprüche 1 bis 11.

14. Öffentliches Verkehrsmittel nach Anspruch 13, **dadurch gekennzeichnet, dass** das Ein- bzw. Ausschalten des Energiesparmoduls (10) durch einen Befehl konfiguriert wird, der ausgehend von einer Konfigurationszentrale (2), die außerhalb des öffentlichen Verkehrsmittels (1) liegt, empfangen wird.

## Claims

1. A temperature regulation assembly comprising an energy saving module (10), a temperature regulating system (20) and a temperature sensor (30), said energy saving module (10) comprising connection means (14) for connecting to said temperature regulating system (20) and to said temperature sensor (30), the regulating system (20) being associated with air conditioning means and being configured to maintain the temperature of a cabin of a passenger transportation vehicle at a setpoint temperature according to a temperature measured by the temperature sensor (30) corresponding to the temperature of the cabin, said assembly being **characterized in that** the energy saving module (10) comprises temperature shifting means (15) able to shift said temperature measured by the temperature sensor (30) by a predetermined value, said temperature measured by the temperature sensor (30) being incremented when the air conditioning means are configured to heat and said temperature measured by the temperature sensor (30) being reduced when the air conditioning means are configured to cool.

2. An assembly according to claim 1, **characterized in that** the shifting means increment or reduce the temperature measured by the temperature sensor (30) according to a temperature outside said cabin.

3. An assembly according to one of claims 1 or 2, **characterized in that** said energy saving module (10) comprises control means (11) for putting the energy saving module (10) into operating mode or stop mode.

4. An assembly according to claim 3, **characterized in that** said energy saving module (10) further comprises receiving means (13) able to receive control signals and **in that** the control means (11) put the energy saving module (10) into operating mode or stop mode according to a received control signal.

5. An assembly according to claim 3, **characterized in that** said energy saving module (10) further comprises a user interface module (12) and **in that** the control means (11) put the energy saving module (10) into operating mode or stop mode according to a control signal provided by the user interface module (12).

6. An assembly according to claim 4 or 5, **characterized in that** the control signal comprises information on times at which the energy saving module (10) put into operation or stop its operation.

7. An assembly according to one of claims 3 to 6, **characterized in that** said energy saving module (10) comprises motion detection means (16) and **in that** the control means (11) are detection to put into operation or stop the operation of said configured (10) according to a signal coming from said motion detection means (16).

8. An assembly according to one of claims 1 to 7, **characterized in that** said energy saving module (10) comprises an energy generating module (17) to supply the energy saving module (10) with electrical energy.

9. An assembly according to claim 8, **characterized in that** the energy generating module (17) comprises a solar cell.

10. An assembly according to one of claims 8 or 9, **characterized in that** the energy generating module comprises conversion means for converting mechanical energy into electrical energy.

11. An assembly according to one of claims 1 to 10, **characterized in that** said energy saving module (10) comprises energy storage means (18).

12. A control system for controlling the air conditioning means comprising a temperature regulation assembly in accordance with one of claims 1 to 11 and a configuration centre (2), said temperature regulation assembly being located in a passenger transportation vehicle (1), and said configuration centre (2) being outside the passenger transportation vehicle (1) and being configured to send commands able to configure the putting into operation or the stopping of the energy saving module (10).

13. A passenger transportation vehicle, in particular a rail vehicle, comprising air conditioning means and a temperature regulation assembly in accordance with one of claims 1 to 11.

14. A passenger transportation vehicle in accordance with claim 13, **characterized in that** the putting into operation or the stopping of the energy saving module (10) is configured by a command received from a configuration centre (2) outside said passenger transportation vehicle (1).
